# EUROPEAN PATENT APPLICATION

(11) **EP 2 317 218 A1**
(43) Date of publication of application: **04.05.2011**
(21) Application number: 10186845.3
(22) Date of filing: 07.10.2010
(51) Int. Cl.: F21V 19/00, G02F 1/13357, G09G 3/34

(54) **Light emitting module, backlight unit and display apparatus**

(30) Priority: 16.10.2009 KR 20090098740; 08.01.2010 KR 20100001916
(71) Applicant: Samsung Electronics Co., Ltd, Suwon-si, Gyeonggi-do 442-742 (KR)
(72) Inventor: Kang, Jeong-il, Gyeonggi-do (KR); Jung, Sun-mi, Gyeonggi-do (KR); Choi, Young-deok, Seoul (KR); Choi, Hyo-soon, Gyeonggi-do (KR)
(74) Representative: D'Halleweyn, Nele Veerle Trees Gertrudis

(57) **Abstract**

A light emitting module, a backlight unit (BLU) and a display apparatus are provided. The display apparatus includes a light emitting module including a light emitting unit including one or more light emitting elements which are electrically connected to each other; and a board on which the light emitting unit is disposed. The board includes a first terminal which is connected to a first end of the light emitting unit, and a ground portion which connects a second end of the light emitting unit to a ground. Therefore, it is possible to design a thinner BLU, thereby making a display device slimmer.

## Description

Apparatuses consistent with the present disclosure relate to a light emitting module, a backlight unit (BLU) and a display apparatus, and more particularly, to a light emitting module, a BLU and a display apparatus which displays an image using a light emitting module disposed therein as a BLU.

Liquid crystal displays (LCDs) are among the most common display types available. An LCD panel of an LCD is not capable of emitting light by itself, and thus an LCD includes a backlight unit (BLU) to project backlight onto the LCD panel.

BLUs include light emitting elements which emit backlight, and driving elements which drive the light emitting elements. Light emitting elements are arranged to efficiently project backlight onto the LCD panel, and a predetermined number of driving elements is required to smoothly drive light emitting elements.

In the past, LCDs tended to be larger in size. However, not only large-sized LCD televisions (TVs) but also slim LCD TVs have recently become important technical issues. It is a natural tendency to seek slim LCD TVs according to technical development, but it is very difficult for developers to design BLUs to meet the demands for LCD TVs that are both large-sized and slim, because there are certain components that an LCD TV should contain.

Therefore, there is a need for methods to design BLUs capable of meeting the demands for LCD TVs that are both large-sized and slim.

Exemplary embodiments overcome the above disadvantages and other disadvantages not described above. Also, the exemplary embodiments are not required to overcome the disadvantages described above, and an exemplary embodiment may not overcome any of the problems described above.

Exemplary embodiments provide a light emitting module, one end of which is connected to ground, a backlight unit (BLU) and a display apparatus.

According to an aspect of an exemplary embodiment, there is provided display apparatus including a display which displays a video; and a backlight unit (BLU) which is mounted on the display to provide a light to the display, wherein the BLU includes a light emitting module; a chassis which houses the light emitting module; and a driving unit which is disposed on the chassis, and drives the light emitting module, wherein the light emitting module includes a light emitting unit including two or more light emitting elements electrically connected to each other; and a board on which the light emitting unit is disposed, the board including a first terminal connected to a first end of the light emitting unit, and a ground portion which connects a second end of the light emitting unit to a ground.

The ground portion may connect the second end of the light emitting unit to the ground through a via.

The board may include a first printed circuit board (PCB) layer on which the light emitting unit is disposed; and a second PCB layer which connects the second end of the light emitting unit to the ground, wherein the via may connect the first PCB layer and the second PCB layer, so that the second end of the light emitting unit is connected to the ground.

The board may further include an insulating layer which is disposed between the first PCB layer and the second PCB layer and insulates the first PCB layer from the second PCB layer.

The second PCB layer may be a metal PCB layer.

The board may include a PCB layer on which the light emitting unit is disposed; and the ground portion is configured in such a manner that a connection member connects the PCB layer to the chassis through the via so that the second end of the light emitting unit is electrically connected to the chassis, thereby being connected to the ground.

The first end and the second end of the light emitting unit may be an anode side and a cathode side of the light emitting unit, respectively, and the first terminal of the board may be a positive terminal.

The driving unit may include a current sensor which senses a current output to the first terminal of the board; a dimming switch unit which adjusts a current supplied to the light emitting module; and a switching controller which controls a switching operation of the dimming switch unit according to the current sensed by the current sensor.

The driving unit may include a current sensor which senses a current output to the first terminal of the board; and a linear controller which adjusts a current supplied to the light emitting module according to the current sensed by the current sensor.

The light emitting module and the driving unit may be connected through a single line.

The BLU may include an edge type BLU or a direct type BLU.

According to an aspect of another exemplary embodiment, there is provided a backlight unit (BLU) including a light emitting module; and a driving unit which drives the light emitting module, wherein the light emitting module may include a light emitting unit which includes one or more light emitting elements electrically connected to each other; and a board on which the light emitting unit is disposed, the board including a first terminal connected to a first end of the light emitting unit, and a ground portion which connects a second end of the light emitting unit to a ground.

According to an aspect of another exemplary embodiment, there is provided a display apparatus, including a display which displays a video; a backlight unit (BLU) which is mounted on the display to provide a light to the display, wherein the BLU may include a plurality of light emitting modules which include a light emitting unit which includes at least two light emitting elements electrically connected to each other, and a board on which the light emitting unit is disposed, the board including a first terminal and a second terminal electrically connecting the two or more light emitting elements; a chassis which houses the light emitting module; and a driving unit which is disposed on the chassis, and drives the plurality of light emitting modules, wherein the driving unit may include a first terminal through which the driving unit is connected to a first light emitting module among the plurality of light emitting modules; and a second terminal through which the driving unit is connected to another light emitting module among the plurality of light emitting modules.

The first terminal of the first light emitting module may be connected to the first terminal of the driving unit, and the second terminal of the first light emitting module may be connected to the first terminal of the second light emitting module.

The second light emitting module is the other light emitting module such that the second terminal of the second light emitting module may be connected to the second terminal of the driving unit.

The plurality of light emitting module may further include a third light emitting module and a fourth light emitting module, and the second terminal of the second light emitting module may be connected to the first terminal of the third light emitting module, the second terminal of the third light emitting module may be connected to the first terminal of the fourth light emitting module, and the second terminal of the fourth light emitting module may be connected to the second terminal of the driving unit, the fourth light emitting module being the other light emitting module.

The plurality of light emitting modules may be connected to each other in series.

The first terminal and the second terminal of the plurality of light emitting modules may be an anode terminal and a cathode terminal, respectively.

The driving unit may be provided in a plural number to correspond to the plurality of light emitting modules to drive the plurality of light emitting modules, respectively. Particularly, a plurality of driving units, including the driving unit, may be provided in a plural number corresponding to a number of pairs of light emitting modules among the plurality of light emitting modules to drive the plurality of light emitting modules, respectively.

According to yet another aspect of the exemplary embodiments, there is provided a backlight unit (BLU) including a plurality of light emitting modules which include a light emitting unit which includes at least two light emitting elements electrically connected to each other, and a board on which the light emitting unit is disposed, the board including a first terminal and a second terminal electrically connecting the at least two light emitting elements disposed between the first terminal and the second terminal; a chassis which houses the plurality of light emitting modules; and a driving unit which is disposed on the chassis, and drives the plurality of light emitting modules, wherein the driving unit may be connected to the first terminal of an initial light emitting module among the plurality of light emitting modules and to the second terminal of a final light emitting module among the plurality of light emitting modules, and drive the plurality of light emitting modules.

The plurality of light emitting modules may be connected in series such that second terminal of the initial light emitting module may be connected to the first terminal of a first light emitting module among the plurality of light emitting modules and disposed adjacent to the initial light emitting module.

The first light emitting module may be the final light emitting module, such that the second terminal of the first light emitting module may be connected to the driving unit.

The plurality of light emitting modules may further include a second light emitting module and a third light emitting module, the second terminal of the first light emitting modules may be connected to the first terminal of the second light emitting module, the second terminal of the second light emitting modules may be connected to the first terminal of the third light emitting module, and the second terminal of the third light emitting modules may be connected to the driving unit such that the third light emitting module is the final light emitting module.

The plurality of light emitting modules may be connected to each other in series.

The first terminal and the second terminal of the plurality of light emitting modules may be an anode terminal and a cathode terminal, respectively.

The driving unit may be provided in a plural number to correspond to the plurality of light emitting modules to drive the plurality of light emitting modules, respectively.

### BRIEF DESCRIPTION OF THE DRAWINGS

The above and/or other aspects will be more apparent by describing certain exemplary embodiments with reference to the accompanying drawings, in which:

FIG. 1 is a block diagram of an LCD TV to which the exemplary embodiments are applicable;

FIG. 2 is a view illustrating a via type groundable light emitting module according to an exemplary embodiment;

FIG. 3A is a view illustrating in greater detail the via type groundable light emitting module shown in FIG. 2;

FIG. 3B is a view illustrating another via type groundable light emitting module;

FIG. 4 is a view illustrating a fixing screw type groundable light emitting module according to an exemplary;

FIG. 5 is a view illustrating in greater detail the fixing screw type groundable light emitting module shown in FIG. 4;

FIG. 6 is a block diagram of a driving circuit of a switch type groundable light emitting module according to an exemplary embodiment;

FIG. 7 is a circuit view illustrating the driving circuit of the switch type groundable light emitting module shown in FIG. 6;

FIG. 8 is a circuit view illustrating a driving circuit of a linear type groundable light emitting module according to an exemplary embodiment;

FIG. 9 is a view illustrating a BLU in which a groundable light emitting module is disposed according to an exemplary embodiment;

FIG. 10 is a view provided to explain a method for connecting three driving units to six light emitting modules according to an exemplary embodiment;

FIG. 11 is a view illustrating a BLU in which a driving unit is connected to a plurality of light emitting modules according to the exemplary embodiment shown in FIG. 10;

FIG. 12 is a view provided to explain a method for connecting four driving units to eight light emitting modules according to an exemplary embodiment;

FIG. 13 is a view illustrating a BLU in which a driving unit is connected to a plurality of light emitting modules according to the exemplary embodiment shown in FIG. 12;

FIG. 14 is a view provided to explain a method for connecting two driving units to four light emitting modules according to an exemplary embodiment;

FIG. 15 is a view illustrating a BLU in which a driving unit is connected to a plurality of light emitting modules according to the exemplary embodiment shown in FIG. 14;

FIG. 16 is a view provided to explain a method for connecting a driving unit to four light emitting modules according to an exemplary embodiment; and

FIG. 17 is a view illustrating a BLU in which a driving unit is connected to a plurality of light emitting modules according to the exemplary embodiment shown in FIG. 16.

### DETAILED DESCRIPTION OF EXEMPLARY EMBODIMENTS

Certain exemplary embodiments will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the disclosure with unnecessary detail.

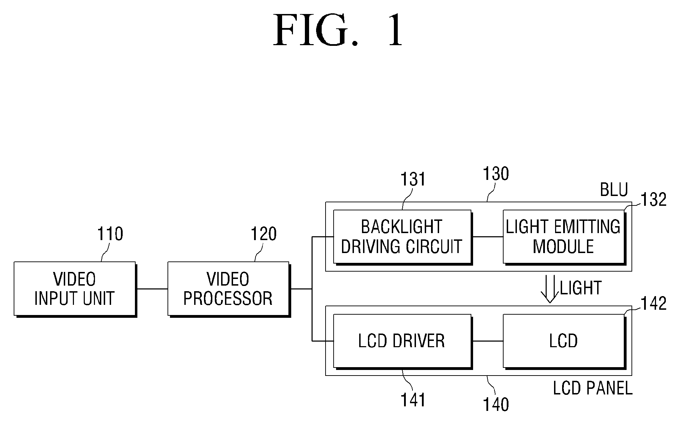

FIG. 1 is a block diagram of a LCD TV to which the exemplary embodiments are applicable. The LCD TV of FIG. 1 includes a video input unit 110, a video processor 120, a BLU 130 and an LCD panel 140.

The video input unit 110 includes a plurality of input terminals. The video input unit 110 receives a component video signal, a super-video home system (S-VHS) video signal and a composite video signal from an external device, such as a video player or a digital versatile disc (DVD) player, through the plurality of input terminals.

The video processor 120 performs signal processing, such as video decoding, video scaling or frame rate conversion (FRC), with respect to a video signal or broadcast content output from the video input unit 110. Additionally, the video processor 120 generates a video signal of a format suitable for being displayed on the LCD panel 140, and generates a brightness control signal required by the BLU 130.

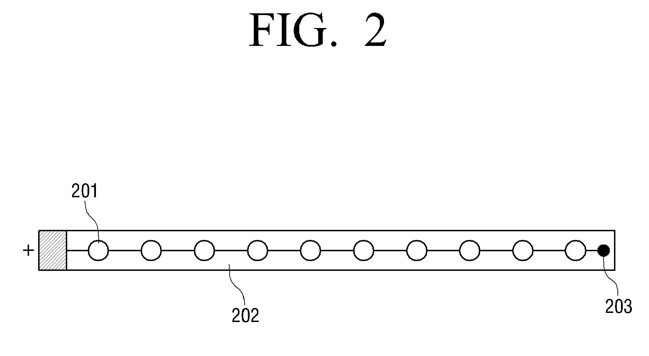

The BLU 130 projects a backlight onto the LCD panel 140, because the LCD panel 140 is not capable of emitting light by itself. The BLU 130 includes a backlight driving circuit 131 and a light emitting module 132. The backlight driving circuit 131 and the light emitting module 132 will be described below in detail with reference to FIGS. 2 to 8.

The LCD panel 140 adjusts transmittance of light emitted from the BLU 130, visualizes a video signal and displays the visualized video signal. The LCD panel 140 includes an LCD driver 141 and an LCD 142.

The LCD driver 141 receives a video signal from the video processor 120, generates a driving signal to drive the LCD 142 using luminance information, color information or other information contained in the received video signal, and outputs the generated driving signal to the LCD 142.

The LCD 142 is configured in such a manner that two substrates having electrodes face each other and a liquid crystal material is injected into a gap between the two substrates. Herein, if a voltage is applied to the electrodes of the two substrates, an electrical field is formed so that molecules of the injected liquid crystal material are moved to adjust the transmittance of light. Accordingly, the LCD 142 may adjust the transmittance of light based on the video signal.

Hereinafter, the configuration of the light emitting module is now described in greater detail with reference to FIGS. 2 to 5. FIG. 2 illustrates a via type groundable light emitting module according to an exemplary embodiment.

Referring to FIG. 2, the via type groundable light emitting module comprises a light emitting unit 201, a printed circuit board (PCB) 202 and a via 203.

The light emitting unit 201 includes a plurality of light emitting diodes (LEDs), which are electrically connected to each other. As shown in FIG. 2, the light emitting unit 201 includes ten LEDs which are connected and modularized. In more detail, ten LEDs in a single light emitting unit 201 are connected to each other in series. While ten LEDs are modularized in a single LED module in the exemplary embodiment, this number of LEDs is merely exemplary. Accordingly, there is no limitation to the number of LEDs modularized in a single LED module.

The light emitting unit 201 is disposed on the PCB 202. An anode side of the light emitting unit 201 is connected to a positive terminal of the PCB 202, and a cathode side of the light emitting unit 201 is connected to the ground through the via 203.

The PCB 202 includes the positive terminal connected to the anode side of the light emitting unit 201, and a ground portion which connects the cathode side of the light emitting unit 201 to the ground. In more detail, the ground portion of the PCB 202 forms the via 203 through which the cathode side of the light emitting unit 201 is connected to the ground.

The via 203 is formed at the end of the PCB 202 opposite to the positive terminal of the PCB 202, and enables the cathode side of the light emitting unit 201 to be connected to the ground.

As described above, if the cathode side of the light emitting unit 201 is connected to the ground through the via 203, the light emitting module 132 and the backlight driving circuit 131 may be connected through a single line, and therefore it is possible to reduce the thickness of the BLU.

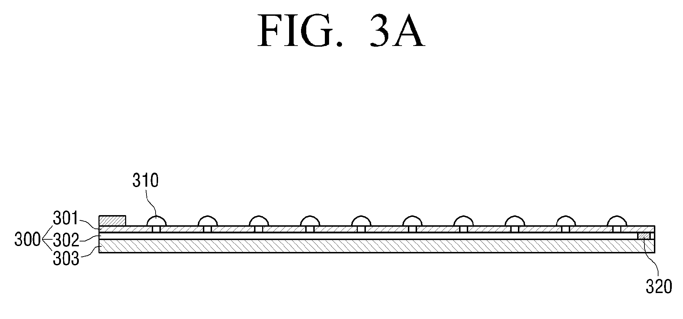

FIG. 3A is a view illustrating in greater detail a via type groundable light emitting module according to an exemplary. In FIG. 3A, a PCB 300 includes a PCB pattern layer 301, an insulating layer 302 and a metal PCB layer 303.

Additionally, a plurality of light emitting elements 310 are disposed on the PCB pattern layer 301 and are electrically connected to each other by the PCB pattern layer 301. The PCB pattern layer 301 includes a positive terminal and a ground portion which are disposed at opposite ends thereof.

The metal PCB layer 303 is connected to the PCB pattern layer 301 through a via 320, so that the cathode side of the light emitting elements 310 are connected to the ground.

Additionally, the insulating layer 302 is disposed between the PCB pattern layer 301 and the metal PCB layer 303, and insulates the PCB pattern layer 301 from the metal PCB layer 303 to prevent electricity from flowing between the PCB pattern layer 301 and the metal PCB layer 303.

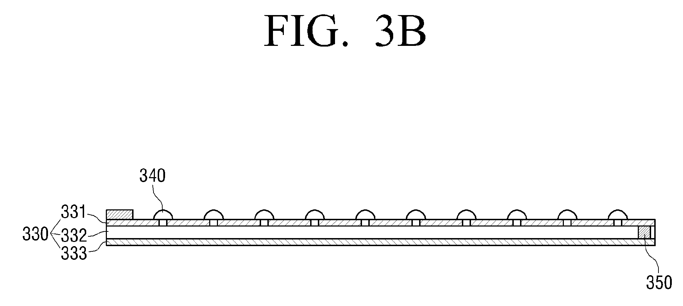

FIG. 3B is a view illustrating in greater detail a via type groundable light emitting module according to another exemplary embodiment. In FIG. 3B, a PCB 330 includes a first PCB pattern layer 331, a PCB layer 332 and a second PCB pattern layer 333.

Additionally, a plurality of light emitting elements 340 are disposed on the first PCB pattern layer 331 and are electrically connected to each other by the first PCB pattern layer 331. The first PCB pattern layer 331 includes a positive terminal and a ground portion which are disposed at opposite ends thereof.

The second PCB pattern layer 333 is connected to the first PCB pattern layer 331 through a via 350, so that the cathode side of each of the light emitting elements 340 is connected to the ground.

Furthermore, the PCB layer 332 is disposed between the first PCB pattern layer 331 and the second PCB pattern layer 333, and insulates the first PCB pattern layer 331 from the second PCB pattern layer 333 to prevent electricity from flowing between the first PCB pattern layer 331 and the second PCB pattern layer 333.

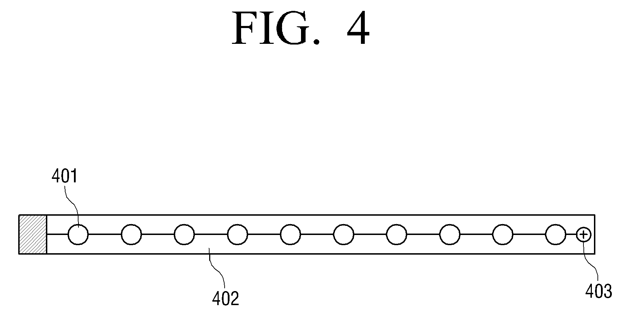

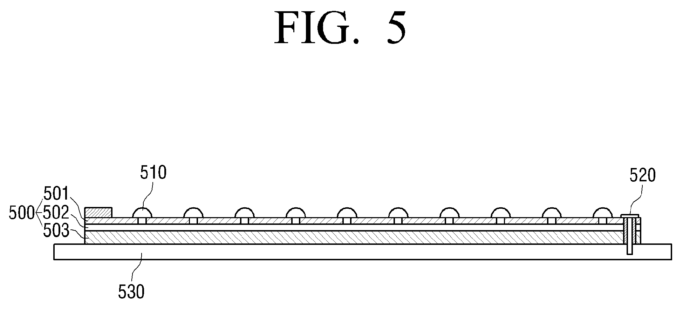

Hereinafter, a structure in which a cathode side of a light emitting unit is grounded to a bottom chassis using a fixing screw on a PCB when it is difficult to connect the cathode side of the light emitting unit to a bottom surface of the PCB, is now described in detail with reference to FIGS. 4 and 5. The bottom chassis is the last component to be fastened to the BLU, and functions to reinforce the BLU against impact and protect the BLU as a whole. The bottom chassis may be made of metallic materials.

FIG. 4 illustrates in detail a fixing screw type groundable light emitting module according to an exemplary embodiment. In FIG. 4, the fixing screw type groundable light emitting module includes a light emitting unit 401, a PCB 402 and a fixing screw 403.

The light emitting unit 401 includes a plurality of LEDs, which are electrically connected to each other. As shown in FIG. 4, the light emitting unit 401 includes ten LEDs which are connected and modularized. In more detail, ten LEDs in a single LED module are connected to each other in series. While ten LEDs are modularized in a single LED module in the exemplary embodiment, this number of LEDs is merely exemplary. Accordingly, there is no limitation to the number of LEDs modularized in a single LED module.

Additionally, the light emitting unit 401 is disposed on the PCB 402. An anode side of the light emitting unit 401 is connected to a positive terminal of the PCB 402, and a cathode side of the light emitting unit 401 is connected to the bottom chassis through the fixing screw 403 and is connected to ground. In this situation, the bottom chassis acts as an electrical ground (GND).

The PCB 402 comprises a positive terminal connected to the anode side of the light emitting unit 401, and a ground portion which connects the cathode side of the light emitting unit 401 to the ground. In more detail, the ground portion of the PCB 402 is configured to enable the cathode side of the light emitting unit 401 to be connected to the ground using the fixing screw 403.

The fixing screw 403 connects a top surface of the PCB 402 and the bottom chassis through a via formed at an end opposite to the positive terminal of the PCB 402. Accordingly, the fixing screw 403 connects the cathode side of the light emitting unit 401 to the ground. Additionally, the fixing screw 403 may function to fix the PCB 402 to the bottom chassis.

As described above, when it is difficult to connect the cathode side of the light emitting unit 401 to the bottom surface of the PCB 402, if the cathode side of the light emitting unit 401 is connected to the ground through the fixing screw 403, the light emitting module 132 and the backlight driving circuit 131 may be connected using a single line. Thus, it is possible to reduce the thickness of the BLU.

FIG. 5 illustrates in greater detail a fixing screw type groundable light emitting module according to an exemplary embodiment.

Referring to FIG. 5, the fixing screw type groundable light emitting module includes a bottom chassis 530 in addition to a PCB 500 having the same configuration as those described above with reference to FIGS. 3A and 3B.

The PCB 500 includes a first PCB pattern layer 501, a PCB layer 502 and a second PCB pattern layer 503.

Additionally, a plurality of light emitting elements 510 are disposed on the first PCB pattern layer 501 and are electrically connected to each other by the first PCB pattern layer 501. The first PCB pattern layer 501 includes a positive terminal and a ground portion which are disposed on opposite sides thereof.

The second PCB pattern layer 503 does not connect the cathode sides of the light emitting elements 510 to ground, unlike the metal PCB layer 303 of FIG. 3A or the second PCB pattern layer 333 of FIG. 3B.

The bottom chassis 530 is a chassis which is one of the constituents of the BLU and to which a light emitting module is attached. If the bottom chassis 530 is connected to the light emitting elements 510 through a fixing screw, the cathode side of the light emitting elements 510 is connected to the ground. In this situation, the fixing screw 520 may not only connect the cathode side of the light emitting elements 510 to the ground, but also may fix the PCB 500 to the bottom chassis 530.

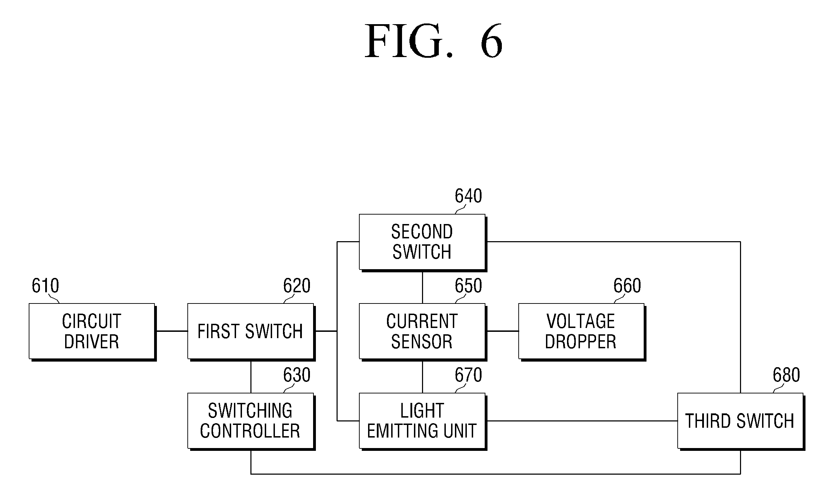

Hereinafter, a driving circuit which drives a groundable light emitting module is now described in detail with reference to FIGS. 6 to 8.

FIG. 6 is a block diagram of a driving circuit of a switch type groundable light emitting module according to an exemplary embodiment. In FIG. 6, the driving circuit includes a circuit driver 610, a first switch 620, a switching controller 630, a second switch 640, a current sensor 650, a voltage dropper 660, a light emitting unit 670, and a third switch 680.

The circuit driver 610 includes a power source which generates a drive current to drive the driving circuit.

The switching controller 630 controls an output current by changing duty cycles of the first switch 620 and the second switch 640 according to an LED current sensed by the current sensor 650.

The current sensor 650 is connected to a positive terminal of the light emitting unit 670, and senses a current flowing in the light emitting unit 670.

The voltage dropper 660 reduces an input voltage when a high voltage is input to the light emitting unit 670.

The light emitting unit 670 includes a plurality of LEDs. A anode side of the light emitting unit 670 is connected to the current sensor 650, and an cathode side of the light emitting unit 670 is connected to the ground.

In displays in the related art, both a cathode side and an anode side of a light emitting unit are connected to a driving unit, and thus a current sensor senses an output current from the ground. However, in the exemplary embodiment, the current sensor 650 senses a current output to the anode side of the light emitting unit 670. In this situation, the output current may be returned to the ground such that the light emitting unit 670 may be driven even when the cathode side of the light emitting unit 670 is connected to the ground.

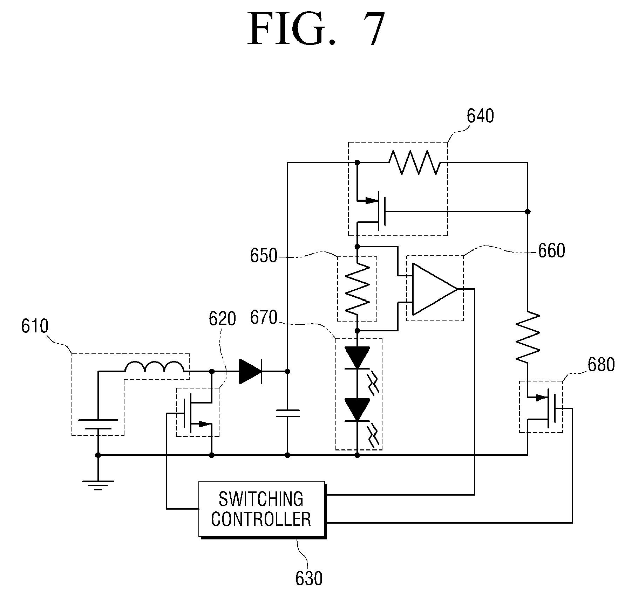

FIG. 7 is a circuit view of the driving circuit of the switch type groundable light emitting module shown in FIG. 6.

The driving circuit shown in FIG. 7 is merely an example of the driving circuit of the switch type groundable light emitting module, and exemplary embodiments are not limited thereto. Accordingly, other various circuits may be applicable.

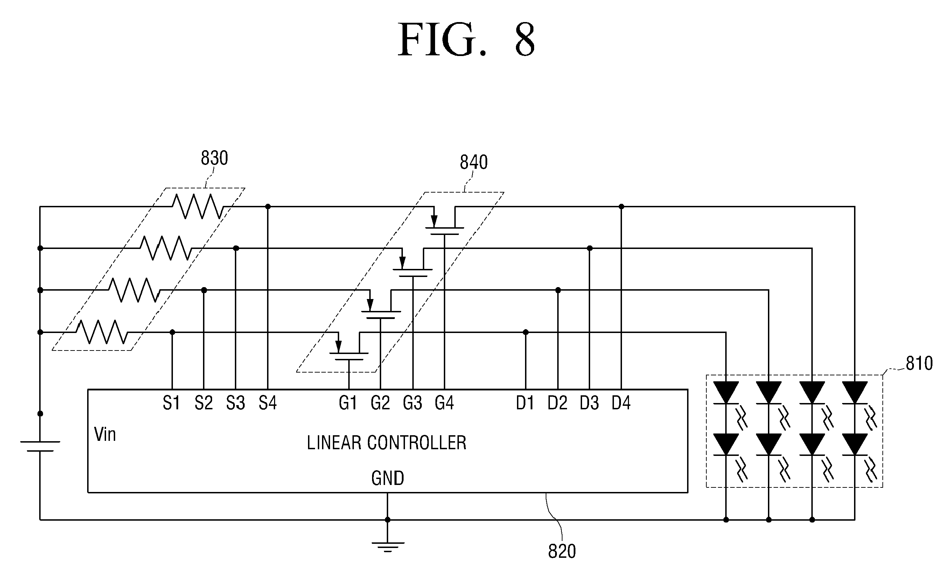

FIG. 8 is a circuit view illustrating a driving circuit of a linear type groundable light emitting module according to an exemplary embodiment. The driving circuit of FIG. 8 includes a light emitting unit 810, a linear controller 820, a current sensor 830 and a switch unit 840.

The light emitting unit 810 includes a plurality of LEDs. As shown in FIG. 8, an anode side of the light emitting unit 810 is connected to the current sensor 830, and a cathode side of the light emitting unit 810 is connected to the ground.

The linear controller 820 controls a drive current supplied to the light emitting unit 810 by adjusting a duty cycle of the switch unit 840 according to a current sensed by the current sensor 830.

The current sensor 830 is connected to a positive terminal of the light emitting unit 810, and senses a current flowing in the light emitting unit 810. According to the sensed current, the linear controller 820 controls the switch unit 840 to adjust the drive current supplied to the light emitting unit 810.

Additionally, the current sensor 830 senses a current output to the anode side of the light emitting unit 810, in the same manner as the current sensor 650 of FIG. 6. In this situation, the output current may be returned to the ground such that the light emitting unit 810 may be driven even when the cathode side of the light emitting unit 810 is connected to the ground.

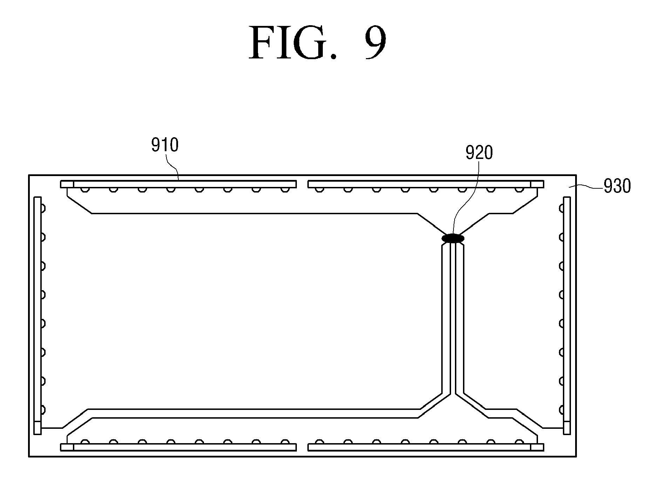

FIG. 9 illustrates a BLU according to an exemplary embodiment.

The BLU of FIG. 9 includes a light emitting module 910, a driving unit 920 and a bottom chassis 930.

The light emitting module 910 is configured in the same manner as those described above with reference to FIGS. 2 to 5. As described above, a cathode side of the light emitting module 910 is also connected to the ground. Accordingly, only an anode side of the light emitting module 910 is connected to the driving unit 920, and thus the light emitting module 910 may require only a single line. In other words, in displays in the related art, two lines are used to connect a light emitting module to a driving unit, but in this the exemplary embodiment, there is no need to use two lines to connect the light emitting module 910 to the driving unit 920. Thus, it is possible to reduce the thickness of the BLU, thereby making the LCD TV slimmer.

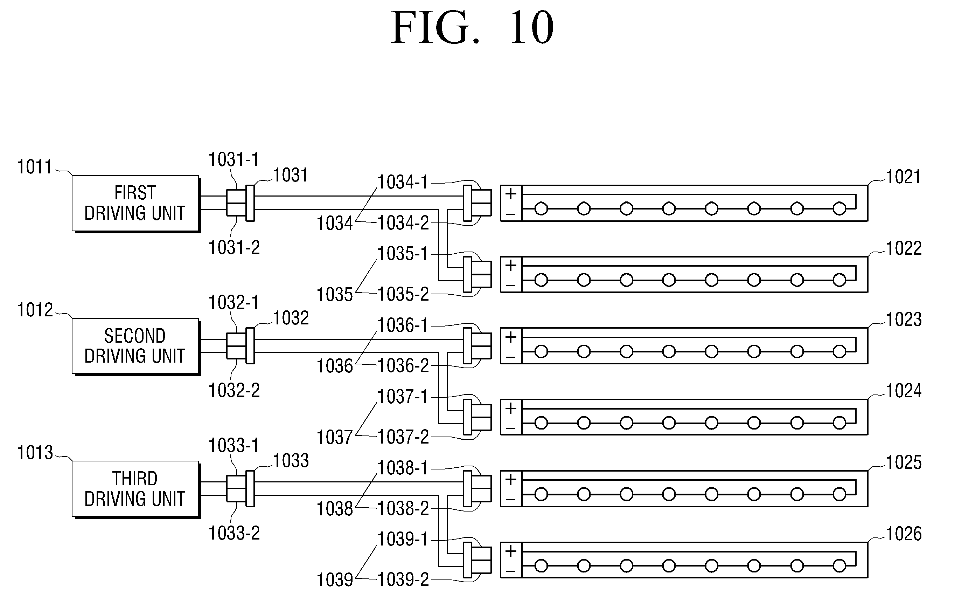

Hereinbelow, another exemplary embodiment to reduce the number of lines connecting the light emitting modules and the driving unit will be explained with reference to FIGS. 10 to 17.

Specifically, the driving unit is connected to the first terminal of the initial light emitting module among the plurality of light emitting modules which are connected to each other in series, is connected to the second terminal of the final light emitting module among a plurality of light emitting modules which are connected to each other in series, and drives the plurality of light emitting modules connected to each other in series. Herein, the initial light emitting module refers to a light emitting module which is connected to the first terminal of the driving unit among the plurality of light emitting modules, and the final light emitting module refers to a light emitting module which is connected to the second terminal of the driving unit among the plurality of light emitting modules.

Accordingly, a single driving unit is connected to a plurality of light emitting modules which are connected to each other in series, and thus the number of lines connecting between the light emitting modules and the driving unit may be reduced.

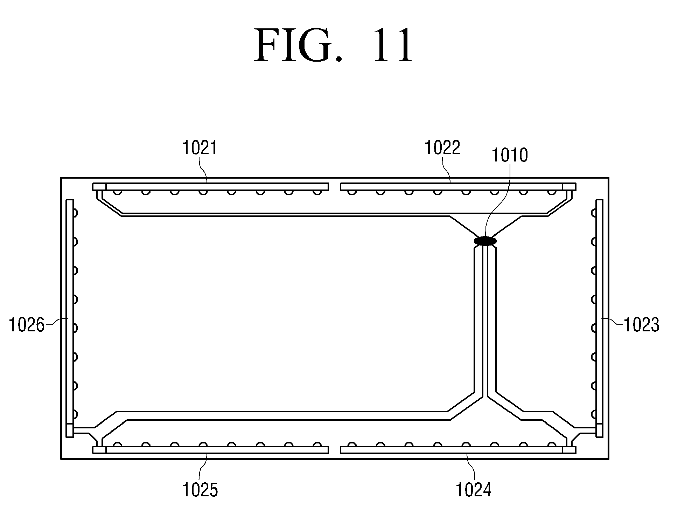

Hereinbelow, a method for connecting a plurality of light emitting modules in series in order to reduce the number of lines connecting the light emitting modules and the driving unit when six light emitting modules are disposed on four surfaces of a BLU (e.g., upper, lower, left, and right surfaces) will be explained with reference to FIGS. 10 and 11.

As shown in FIG. 10, the BLU according to the exemplary embodiment comprises three driving units 1011, 1012, 1013, six light emitting modules 1021, 1022, ..., 1026, and nine connectors 1031, 1032, ..., 1039. Each of six light emitting modules 1021, 1022, ..., 1026 includes a first terminal and a second terminal. The first terminal of each of six light emitting modules 1021, 1022, ..., 1026 is an anode terminal, and the second terminal is a cathode terminal. The first terminal of each of six light emitting modules 1021, 1022, ..., 1026 is connected to the first end (1034-1, 1035-1,..., 1039-1) of the corresponding connector, and the second terminal is connected to the second end (1034-2, 1035-2,..., 1039-2) of the corresponding connector.

The first end of the first connector 1031 connected to the first driving unit 1011 is connected to the first end of the fourth connector 1034 connected to the first light emitting module 1021. The second end of the fourth connector 1034 is connected to the first end of the fifth connector 1035 connected to the second light emitting module 1022. The second end of the fifth connector 1035 is connected to the second end of the first connector 1031. The first light emitting module 1021 becomes the initial light emitting module being connected to the first driving unit 1011, and the second light emitting module 1022 becomes the final light emitting module being connected to the first driving unit 1011.

A method for connecting the second driving unit 1012, the third light emitting module 1023, and the fourth light emitting module 1024 is the same as to the method for connecting to the first driving unit 1011, the first light emitting module 1021, and the second light emitting module 1022. The first end of the second connector 1032 connected to the second driving unit 1012 is connected to the first end of the sixth connector 1036 connected to the third light emitting module 1021. The second end of the sixth connector 1036 is connected to the first end of the seventh connector 1037 connected to the fourth light emitting module 1024. The second end of the seventh connector 1037 is connected to the second end of the second connector 1032. The third light emitting module 1023 becomes the initial light emitting module being connected to the second driving unit 1012, and the fourth light emitting module 1024 becomes the final light emitting module being connected to the second driving unit 1012.

Likewise, a method for connecting the third driving unit 1013, the fifth light emitting module 1025, and the sixth light emitting module 1026 is identical to the method for connecting the first driving unit 1011, the first light emitting module 1021, and the second light emitting module 1022. The fifth light emitting module 1025 becomes the initial light emitting module being connected the third driving unit 1013, and the sixth light emitting module 1026 becomes the final light emitting module being connected to the third driving unit 1013.

FIG. 11 is a view illustrating a BLU in which the driving unit 1010 is connected to the plurality of light emitting modules 1021, 102, ..., 1026 according to the exemplary embodiment shown in FIG. 10. As shown in FIG. 11, the first and second light emitting modules 1021, 1022, the third and fourth light emitting modules 1023, 1024, and the fifth and sixth light emitting modules 1025, 1026 are connected to each other in series. That is, a terminal of each of the plurality of light emitting modules 1021, 1022, ..., 1026 is connected to the driving unit, and the other terminal of each of the plurality of light emitting modules 1021, 1022, ..., 1026 is connected to a terminal of another light emitting module, such that both terminals of each of the plurality of light emitting modules 1021, 1022, ..., 1026 are not connected to the driving unit.

According to the exemplary embodiment, two light emitting modules are connected to a single driving unit in series, thereby reducing the number of lines connecting the light emitting modules and the driving unit.

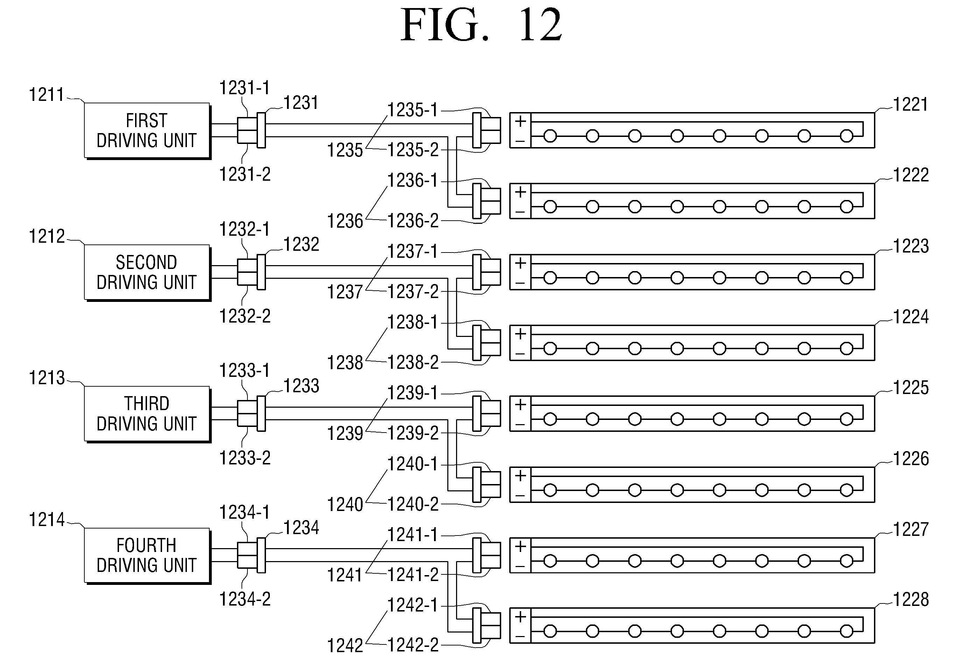

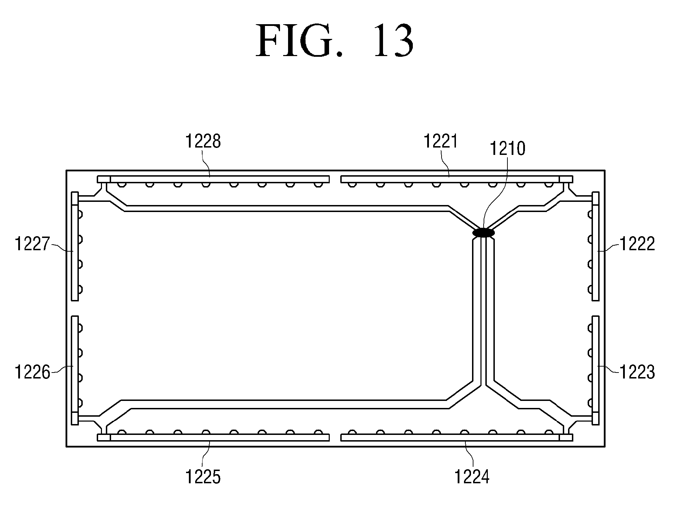

Hereinbelow, a method for connecting a plurality of light emitting modules in series in order to reduce the number of lines connecting between the light emitting modules and the driving unit when eight light emitting modules are disposed on four surfaces of a BLU (e.g., upper, lower, left, and right surfaces) will be explained with reference to FIGS. 12 and 13.

FIG. 12 is a view provided to explain a method for connecting a plurality of driving units to a plurality of driving modules according to an exemplary embodiment.

As shown in FIG. 12, the BLU according to the exemplary embodiment comprises four driving units 1211, 1212, 1213, 1214, eight light emitting modules 1221, 1222, ..., 1228, and twelve connectors 1231, 1232, ..., 1242. Each of the eight light emitting modules 1221, 1222, ..., 1228 includes a first terminal and a second terminal. The first terminal of each of eight light emitting modules 1221, 1222, ..., 1228 is an anode terminal, and the second terminal is a cathode terminal. The first terminal of each of eight light emitting modules 1221, 1222, ..., 1228 is connected to the first end (1235-1, 1236-1,...,1242-1) of the corresponding connector, and the second terminal is connected to the second end (1235-2, 1236-2,...,1242-2) of the corresponding connector.

The first end of the first connector 1231 connected to the first driving unit 1211 is connected to the first end of the fifth connector 1235 connected to the first light emitting module 1221. The second end of the fifth connector 1235 is connected to the first end of the sixth connector 1236 connected to the second light emitting module 1222. The second end of the sixth connector 1236 is connected to the second end of the first connector 1231. The first light emitting module 1221 becomes the initial light emitting module being connected to the first driving unit 1211, and the second light emitting module 1222 becomes the final light emitting module being connected to the first driving unit 1211.

Likewise, a method for connecting the second driving unit 1212, the third light emitting module 1223, and the fourth light emitting module 1224, a method for connecting the third driving unit 1213, the fifth light emitting module 1225, and the sixth light emitting module 1226, and a method for connecting fourth driving unit 1214, the seventh light emitting module 1227, and the eighth light emitting module are the same as to the method for connecting to the first driving unit 1211, the first light emitting module 1221, and the second light emitting module 1222.

FIG. 13 is a view illustrating a BLU in which the driving units 1210 are connected to the plurality of light emitting modules 1221, 1222, ..., 1228 according to the exemplary embodiment shown in FIG. 12. As shown in FIG. 13, the first and second light emitting modules 1221, 1222, the third and fourth light emitting modules 1223, 1224, the fifth and sixth light emitting modules 1225, 1226, and the seventh and eighth light emitting modules 1227, 1228 are connected to each other in series. That is, a terminal of each of the plurality of light emitting modules 1221, 1222, ..., 1228 is connected to the driving unit, and the other terminal of each of the plurality of light emitting modules 1221, 1222, ..., 1228 is connected to a terminal of another light emitting module, such that both terminals of each of the plurality of light emitting modules 1221, 1222, ..., 1228 are not connected to the driving unit.

According to the exemplary embodiment, two light emitting modules are connected to a single driving unit in series, thereby reducing the number of lines connecting the light emitting modules and the driving unit.

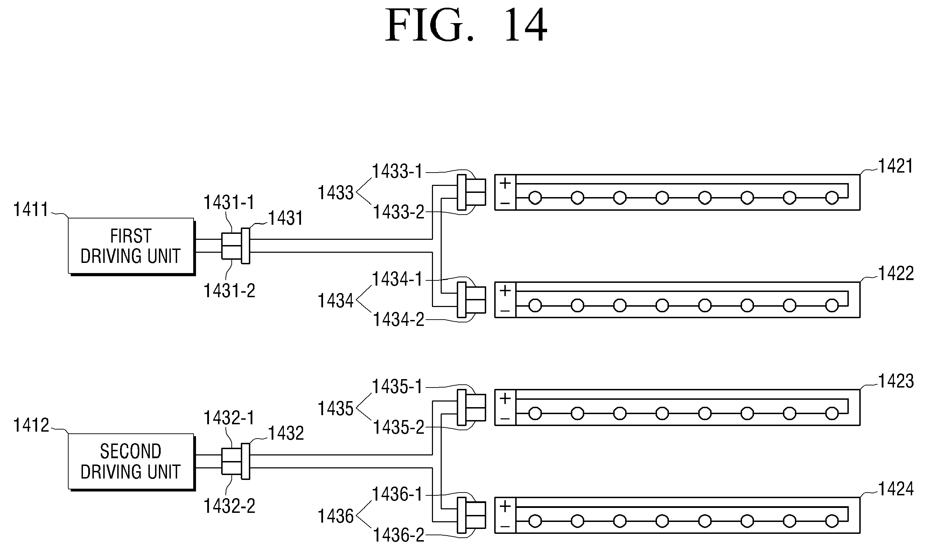

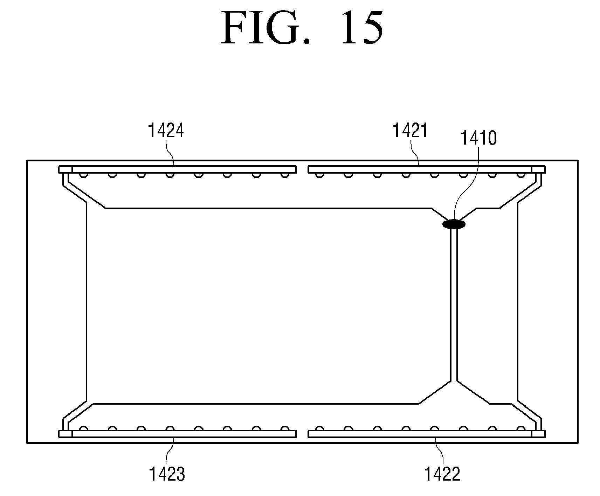

Hereinbelow, a method for connecting a plurality of light emitting modules in series in order to reduce the number of lines connecting the light emitting modules and the driving units when four light emitting modules are disposed on two surfaces of a BLU (e.g., upper and lower surfaces) will be explained with reference to FIGS. 14 and 15.

FIG. 14 is a view provided to explain a method for connecting a plurality of driving units to a plurality of driving modules according to an exemplary embodiment.

As shown in FIG. 14, the BLU according to the exemplary embodiment comprises two driving units 1411, 1412, four light emitting modules 1421, 1422, ..., 1424, and six connectors 1431, 1432, ..., 1436. Each of four light emitting modules 1421, 1422, ..., 1424 comprises a first terminal and a second terminal. The first terminal of each of four light emitting modules 1421, 1422, ..., 1424 is an anode terminal, and the second terminal is a cathode terminal. The first terminal of each of four light emitting modules 1421, 1422, ..., 1424 is connected to the first end (1433-1, 1434-1,..., 1436-1) of the corresponding connector, and the second terminal is connected to the second end (1433-2, 1434-2,..., 1436-2) of the corresponding connector.

The first end of the first connector 1431 connected to the first driving unit 1411 is connected to the first end of the third connector 1433 connected to the first light emitting module 1421. The second end of the third connector 1433 is connected to the first end of the fourth connector 1434 connected to the second light emitting module 1422. The second end of the fourth connector 1434 is connected to the second end of the first connector 1431. The first light emitting module 1421 becomes the initial light emitting module being connected to the first driving unit 1411, and the second light emitting module 1422 becomes the final light emitting module being connected to the first driving unit 1411.

Likewise, a method for connecting the second driving unit 1412, the third light emitting module 1423, and the fourth light emitting module 1424 is identical to the method for connecting to the first driving unit 1411, the first light emitting module 1421, and the second light emitting module 1422.

FIG. 15 is a view illustrating a BLU in which the driving units 1410 are connected to the plurality of light emitting modules 1421, 1422, ..., 1424 according to the exemplary embodiment shown in FIG. 14. As shown in FIG. 15, the first and second light emitting modules 1421, 1422, and the third and fourth light emitting modules 1423, 1424 are connected to each other in series. That is, a terminal of each of the plurality of light emitting modules 1421, 1422, ..., 1424 is connected to the driving unit, and the other terminal of each of the plurality of light emitting modules 1421, 1422, ..., 1424 is connected to an end of another light emitting module, such that both terminals of each of the plurality of light emitting modules 1421, 1422, ..., 1424 are not connected to the driving unit.

According to the exemplary embodiment o, two light emitting modules are connected to a single driving unit in series, thereby reducing the number of lines connecting the light emitting modules and the driving unit.

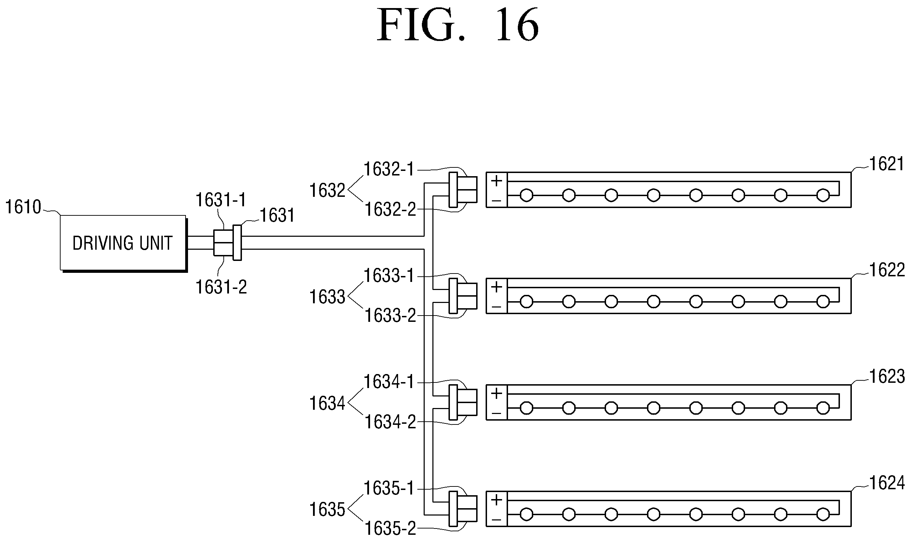

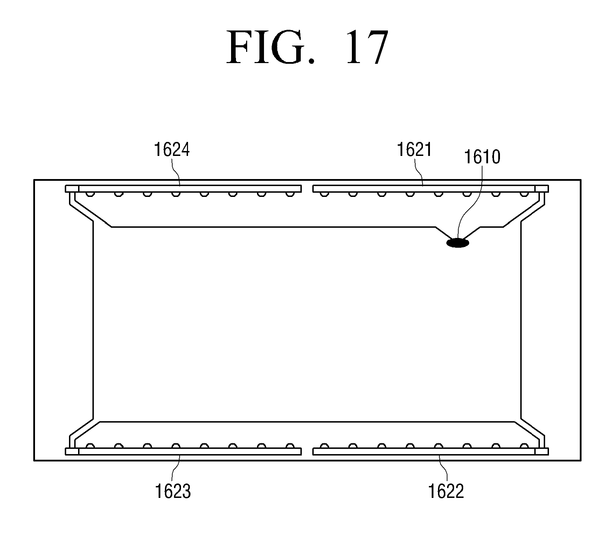

Hereinbelow, a method for connecting a plurality of light emitting modules in series in order to reduce the number of lines connecting the light emitting modules and the driving unit when four light emitting modules are disposed on two surfaces of a BLU (e.g., upper and lower surfaces) will be explained with reference to FIGS. 16 and 17.

FIG. 16 is a view provided to explain a method for connecting a plurality of driving units to a plurality of driving modules according to an exemplary embodiment.

As shown in FIG. 16, the BLU according to the exemplary embodiment includes a single driving unit 1610, four light emitting modules 1621, 1622, .... 1624, and five connectors 1631, 1632, ..., 1635. Each of four light emitting modules 1621, 1622, ..., 1624 includes a first terminal and a second terminal. The first terminal of each of four light emitting modules 1621, 1622, ..., 1624 is an anode terminal, and the second terminal is a cathode terminal. The first terminal of each of four light emitting modules 1621, 1622, ..., 1624 is connected to the first end (1632-1, 1633-1, ..., 1635-1) of the corresponding connector, and the second terminal is connected to the second end (1632-2, 1633-2, ..., 1635-2) of the corresponding connector.

The first end of the first connector 1631 connected to the driving unit 1611 is connected to the first end of the second connector 1632 connected to the first light emitting module 1621. The second end of the second connector 1632 is connected to the first end of the third connector 1633 connected to the second light emitting module 1622. The second end of the third connector 1633 is connected to the first end of the fourth connector 1634 connected to the third light emitting module 1623. The second end of the fourth connector 1634 is connected to the first end of the fifth connector 1635 connected to the fourth light emitting module 1624. The second end of the fifth connector 1635 is connected to the second end of the first connector 1631. The first light emitting module 1621 becomes the initial light emitting module being connected to the driving unit 1611, and the fourth light emitting module 1624 becomes the final light emitting module being connected to the driving unit 1611.

FIG. 17 is a view illustrating a BLU in which the driving unit 1610 is connected to the plurality of light emitting modules 1621, 1622, ..., 1624 according to the exemplary embodiment shown in FIG. 16. As shown in FIG. 15, the first and second light emitting modules 1421, 1422, and the third and fourth light emitting modules 1423, 1424 are connected to each other in series. That is, only one of both terminals of each of the plurality of light emitting modules 1421, 1422, ..., 1424 is connected to another light emitting module, such that both terminals of each of the plurality of light emitting modules 1421, 1422, ..., 1424 are not connected to the driving unit.

According to the exemplary embodiment, a single driving unit and four light emitting modules are connected to each other in series, thereby reducing the number of lines connecting between the light emitting modules and the driving unit.

The light emitting module is connected to the driving unit via the connector in this exemplary embodiment, but this is merely exemplary. The technical concept may be equally applicable when the light emitting modules are directly connected to the driving unit.

The LED modules are disposed outside a display panel in the exemplary embodiment, but this is merely exemplary. Accordingly, LED modules may be disposed on areas other than the outside of the display panel.

Additionally, an edge type BLU has been described in the exemplary embodiments, but this is merely exemplary. Accordingly, the inventive concept of the exemplary embodiments are also applicable to a direct type BLU.

Furthermore, the LCD TV has been described as a display requiring a backlight in the exemplary embodiment, but this is merely exemplary. Accordingly, is the inventive concept of the exemplary embodiments are also applicable to any other displays requiring backlight.

Moreover, the fixing screw is used to fix the PCB to the bottom chassis in the exemplary embodiments, but this is merely exemplary. Accordingly, the exemplary embodiments is also applicable to any other members capable of fixing the PCB to the bottom chassis.

In addition, the exemplary embodiments are equally applicable to a display apparatus comprising only a BLU, or a display apparatus comprising only a light emitting module.

As described above, according to an exemplary embodiment, a display apparatus may connect one side of a light emitting module to the ground, and thus only a single line may be used to connect the light emitting module to a driving unit. Therefore, it is possible to reduce the number of lines in the display apparatus, and the display apparatus may thus be designed more slimly.

The foregoing exemplary embodiments and advantages are merely exemplary and are not to be construed as limiting the present invention. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A display apparatus comprising:
a display (140) which displays a video; and
a backlight unit (BLU) (130) which is mounted on the display to provide a light to the display,
wherein the BLU comprises:
a light emitting module (132), (910);
a bottom chassis (930) which houses the light emitting module; and
a driving unit (131), (920) which is disposed on the bottom chassis, and drives the light emitting module,
wherein the light emitting module comprises:
a light emitting unit (201),(310),(340), (401), (510) comprising two or
more light emitting elements electrically connected to each other; and
a board (202), (300), (330), (402), (500) on which the light emitting unit is disposed, the board comprising a first terminal connected to a first end of the light emitting unit, and a ground portion which connects a second end of the light emitting unit to a ground.

2. The display apparatus as claimed in claim 1, wherein the ground portion connects the second end of the light emitting unit to the ground through a via (320), (350).

3. The display apparatus as claimed in claim 2, wherein the board comprises:
a first printed circuit board (PCB) layer (301), (331) on which the light emitting unit is disposed; and
a second PCB layer (303), (333) which connects the second end of the light emitting unit to the ground,
wherein the via (320), (350) connects the first PCB layer and the second PCB layer, so that the second end of the light emitting unit is connected to the ground.

4. The display apparatus as claimed in claim 3, wherein the board further comprises:
an insulating layer (302), (332) which is disposed between the first PCB layer and the second PCB layer and insulates the first PCB layer from the second PCB layer.

5. The display apparatus as claimed in claim 3 or 4, wherein the second PCB layer is a metal PCB layer.

6. The display apparatus as claimed in one of claims 2 to 5, wherein:
the board (500) comprises a PCB layer (501) on which the light emitting unit is disposed; and
the ground portion is configured in such a manner that a connection member connects the board to the bottom chassis (530) through the via so that the second end of the light emitting unit is electrically connected to the bottom chassis, thereby being connected to the ground.

7. The display apparatus as claimed in one of claims 1 to 6, wherein the first end and the second end of the light emitting unit are an anode side and a cathode side of the light emitting unit, respectively, and the first terminal of the board is a positive terminal.

8. The display apparatus as claimed in one of claims 1 to 7, wherein the driving unit comprises:
a current sensor (650) configured to sense a current output to the first terminal of the board;
a dimming switch unit (620, 640, 680) configured to adjust a current supplied to the light emitting module; and
a switching controller (630) configured to control a switching operation of the dimming switch unit according to the current sensed by the current sensor.

9. The display apparatus as claimed in one of claims 1 to 8, wherein the driving unit comprises:
a current sensor (830) configured to sense a current output to the first terminal of the board; and
a linear controller (820) configured to adjust a current supplied to the light emitting module according to the current sensed by the current sensor.

10. The display apparatus as claimed in one of claims 1 to 9, wherein the light emitting module and the driving unit are connected through a single line.

11. The display apparatus as claimed in one of claims 1 to 10, wherein the BLU comprises an edge type BLU or a direct type BLU.

12. A backlight unit (BLU) for use in a display apparatus as claimed in one of claims 1 to 11.
